# NEW EUROPEAN PATENT SPECIFICATION

(11) **EP 1 512 583 B2**
(45) Date of publication and mention of the opposition decision: **05.03.2014**
(45) Mention of the grant of the patent: 15.11.2006
(21) Application number: 03102709.7
(22) Date of filing: 05.09.2003
(51) Int. Cl.: B60R 13/10, G09F 13/04

(54) **License plate for back illumination and method for making same**
Hinterbeleuchtbares Kennzeichenschild und Verfahren zu seiner Herstellung
Plaque d'immatriculation pouvant être illuminée par derrière et procédé pour sa fabrication

(43) Date of publication of application: 09.03.2005
(73) Proprietor: 3M Innovative Properties Company, St. Paul MN 55144-1000 (US)
(72) Inventor: Frisch, Ruediger, 1831 Diegem (BE); Prollius, Sven, 1831 Diegem (BE); Reimann, Stefan, 1831 Diegem (BE); Eberwein, Arnold, 1831 Diegem (BE)
(74) Representative: Knowles, James Atherton

(56) References cited:
- EP-A- 0 360 420
- EP-A- 1 262 373
- EP-A2- 0 360 420
- EP-A2- 1 262 373
- DE-A- 10 247 708
- DE-A1- 4 126 530
- DE-A1- 10 247 708
- DE-T2- 69 831 331
- DE-U1- 20 022 563
- DE-U1- 20 218 626
- JP-A- H10 119 669
- US-A- 5 692 327
- US-A- 5 692 327
- US-A1- 2003 090 797
- US-A1- 2003 090 797
- DIN 74069 from July 1996

## Description

### Technical field

The present invention relates to a license plate suitable for back illumination, i.e. a backlit license plate, that can be removably mounted to a light source such as for example an electroluminescent device. The present invention further provides a method for making a backlit license plate and to a license plate assembly.

### Background

Commonly employed license plates for motor vehicles for use on roads such as cars, busses and trucks, typically are illuminated from their front face when it is dark. In particular, the license plates typically have indicia representing the license plate number issued by the appropriate national authorities on a retroreflective background. This retroreflectivity enhances visibility of the plate during day time conditions and also during night time conditions when lights of other motor vehicles or street light impinges upon the front face of the license plate. But in order to meet regulatory requirements, the license plate also needs to be illuminated with lights arranged on the motor vehicles. Thus, typically, lights are arranged aside of the license plate so as to illuminate the front face of the license plate.

Such an arrangement has the disadvantage of limiting the design possibilities of a car manufacturer. In particular, the lights that need to be arranged along one or more sides of the license plate prevent the car manufacturer of making more appealing designs as the lights often appear as a disturbing element in the design. Furthermore, such front-lit license plates may suffer from a non-uniform illumination of the license plate.

To overcome this problem, DE 297 12 954 discloses a license plate arrangement that is illuminated from the back. In particular, this German utility model discloses a stiff transparent plastic plate on which the license plate number is depicted as opaque indicia. The stiff plastic plate is held in front of an electroluminescent foil through a holding frame. The electroluminescent foil when activated illuminates the plastic plate from the back. Such an arrangement has the disadvantage that no retroreflectivity is provided which is a requirement of the regulatory authorities of many countries. A further back-lit license plate is disclosed in US 5,692,327.

US 5,692,327 describes a license plate suitable for back illumination, said license plate comprising a laminated comprising:
(i) a transparent polymeric support sheet;
(iii) one or more transparent adhesive layers adhering said transparent polymeric support sheet; and
(iv) indicia and
wherein said license plate can be removably mounted to a light source for back lighting the license plate.

EP 1 262 373 describes a back-lit electroluminescent license plate arrangement that also provides retroreflectivity. In particular, this EP application discloses a housing in which there is arranged in the order given (from back to front) an electroluminescent foil, a transparent retroreflective sheet, a roughening layer such as a highly transparent film with a rough surface and a further transparent cover which closes the front opening of the housing such that all layers of the arrangement are held tightly together. It is taught that the roughening layer overcomes formation of Newton-rings which would otherwise form between the transparent front cover and the retroreflective sheet. The indicia of the license plate can be provided directly on the transparent cover or on a transparent film between the transparent retroreflective sheet and the transparent cover. Although such license plate arrangement provides retroreflectivity and can be illuminated from the back, its manufacturing is complicated and expensive. Also, the manufacturing thereof is not compatible with methods by which the commonly used front lit license plates are made. Accordingly, the manufacturing of such plates requires investments in new manufacturing methods, which hampers the introduction of back lit license plate. Furthermore, when the license plate needs to be replaced, the whole arrangement would need to be replaced including the housing and the electroluminescent sheet. Such is highly undesirable from a cost perspective as well as from an environmental point of view. It might be contemplated though to make it possible for a user to open the housing and only replace the sheet with the indicia. However, such will likely cause the arrangement to be insufficiently sealed such that the quality of the license plate arrangement would deteriorate over time for example by moisture and dirt penetrating into the housing.

DE 202 18 626 U1 is considered to be the closest prior art document and discloses a symbol carrier suitable for back illumination, the symbol carrier comprising:
(i) a transparent light plate;
(ii) a transparent retroreflective sheet;
(iii) the retroreflective sheet is glued with its front side to the backside of the transparent light plate via a transparent adhesive layer;
(iv) raised indicia;
wherein the light plate is integrally connected to a frame which is removably mounted to a back wall,
and wherein the indicia are substantially opaque or have a reduced transparency relative to remaining surface areas of the symbol carrier.

It would thus be desirable to find a further license plate that can be illuminated from the back and that also has retroreflectivity. Preferably, such license plate can be conveniently manufactured, at a low cost. Preferably the method of making the license plate will be compatible with the variety of existing license plate manufacturing methods. Desirably, the license plate can be easily replaced independent of the light source necessary to illuminate it. Preferably, the license plate also has a high durability and can meet regulatory requirements imposed by national authorities.

### Disclosure

In one aspect, the present invention provides a license plate according to claim 1. By the term 'transparent' as used in this application is generally meant that the respective sheet or layer allows light to pass there through without substantial portions thereof being absorbed. Accordingly, transparent materials in connection with the present invention can be optically clear and have a visible light transmission of 80 to almost 100%. The term transparent is however not meant to exclude translucent materials. Translucent materials may have a visible light transmission of only 30 to 80%.
By the term 'transparent retroreflective sheet' is meant that the sheet is capable of retroreflecting light that impinges on the surface of the sheet and is further transparent in the sense set forth above. A transparent retroreflective sheet in accordance with the invention may be highly transparent (transmission for visible light of 80 to 99%) or may be translucent.
By the term 'front' as used in respect of the license plate is meant the side or face of the license plate that presents the license plate number in a right reading fashion to a viewer. By the term 'back' in respect of the license plate then is meant the side or face opposite the front, i.e. the side from which the license plate will be illuminated when in use.

The above-disclosed license plate offers the advantage of combining back lighting with retroreflectivity. Moreover, such plates can be easily produced in a generally cost effective way in existing equipment and manufacturing methods employed for making common license plates that are front lit. Still further, the obtained license plates can generally provide a high durability and can be used with a variety of light sources for back illumination. Moreover, the license plate can be easily replaced without having to replace part or all of the lighting arrangement.

In a further aspect, the present invention provides a license plate assembly comprising a light source and the license plate removably mounted in front of the light source.

### License plate

The license plate comprises a transparent polymeric support sheet and a transparent retroreflective sheet adhered together by a transparent adhesive. The transparent polymeric support sheet will typically be a stiff polymeric support sheet. That is, although the transparent polymeric support sheet may be bended somewhat, it has a sufficient stiffness such that it cannot be folded or wrinkled as may be possible with a film or foil. Thus, the support sheet will typically have a thickness to provide such desired stiffness. Typically, the transparent support sheet will have a thickness between 0.2 and 5 mm, preferably between 0.3 and 3 mm and most preferably between 0.5 mm and 1.5 mm. The transparent polymeric support sheet may be comprised of a single polymer layer or may be comprised of several polymer layers of same or different composition.

The transparent polymeric support sheet is cold-formable. By 'cold-formable' in connection with the invention is meant that raised indicia are formed in the transparent polymeric support sheet at ambient temperature (20 to 35°C) for example through embossing or deep drawing and that such raised indicia are maintained at elevated temperatures to which the license plate may be exposed, e.g. when the motor vehicle is parked in the sun. This typically requires that the polymeric support has a sufficient heat stability, i.e. the polymeric support sheet should typically be heat stable upto temperatures of 60°C to 85°C. Without sufficient heat stability, the number of the license plate may fade over time or become distorted. This will be particularly the case when the indicia are cold-formed through embossing because of stress forces created in the polymeric support sheet during the embossing. Examples of transparent polymeric support sheets that are cold-formable include polymeric support sheets comprising polycarbonate. Also, a polymeric support sheet that is cold-formable may be obtained from a multi-layer construction including one or more thermoplastic polymers and one or more layers of a cross-linkable material. Upon cold-forming the indicia in the polymeric support sheet, the cross-linkable material may be cross-linked to a polymeric cross-linked material. Thus, the one or more layers of polymeric cross-linked material will provide the desired heat stability because the cross-linked material will prevent the thermoplastic layers of the multi-layer sheet from flowing, which would cause the cold-formed indicia to disappear. Still further, a cold-formable polymeric support sheet may comprise one or more layers that comprise a cross-linkable thermoplastic polymer composition. In the non cross-linked state, the polymeric support sheet can be readily cold-formed to provide indicia therein. Subsequent to forming the indicia, the cross-linkable thermoplastic polymer composition can be cross-linked such that the layer(s) looses its thermoplastic properties and sufficient heat stability may thereby be provided.

The cross-linkable material that can be used includes materials that may be heat cross-linked, cross-linked by light including visible light and UV light, cross-linked by electron beams or by gamma irradiation. The cross-linkable material may be a composition that is based on cross-linkable monomeric or low molecular weight components, cross-linkable polymer components as well as combinations thereof. Suitable cross-linkable materials that can be used include for example an electron beam curable vinyl chloride-acrylate copolymer as disclosed in US 4,889,895, a radiation curable polyvinyl chloride as disclosed in US 4,631,229, an epoxy based curable composition as described below for use in the adhesive layer.

The transparent retroreflective sheet for use in connection with the present invention can be a single layer sheet but is generally a multi-layer sheet. The retroreflective sheet may be a microsphere based retroreflective sheet or a so-called cube corner based retroreflective sheet. Microsphere-based sheeting, sometimes referred to as "beaded sheeting," is well known in the art and includes a multitude of microspheres, e.g. glass or ceramic microspheres, typically at least partially embedded in a binder layer, and associated specular or diffuse reflecting materials. The reflective material should be provided functionally behind the microspheres. By 'functionally behind' is meant that the reflective layer is provided behind the microspheres in such a way that in conjunction with the microspheres light will be retroreflected. Typically, this means that the reflective layer is directly provided on the microspheres or is slightly spaced away, through a space coat, from the microspheres to adjust to the focal point of the microspheres. Illustrative examples of microsphere-based sheeting are disclosed in U.S. Pat. Nos. 4,025,159 (McGrath); 4,983,436 (Bailey); 5,064,272 (Bailey); 5,066,098 (Kult); 5,069,964 (Tolliver); and 5,262,225 (Wilson). The reflective material in one embodiment of this invention can be a reflective metal layer. When the reflective layer is a reflective metal layer, it should be provided at such a thickness that enough reflection can occur and at the same time sufficient transparency is obtained as well. Preferably, a dielectric mirror is provided as the reflective layer since a dielectric mirror is typically transparent.

The dielectric mirrors may be similar to known dielectric mirrors disclosed in U.S. Pat. Nos. 3,700,305 and 4,763,985. In using dielectric mirrors with microspheres, the microspheres typically have a refractive index n₂ and have a layer of transparent material disposed thereon which has a refractive index n₁. The opposite face of the transparent material having refractive index n₁, is in contact with a material having a refractive index n₃. Both n₂ and n₃ have a refractive index of at least 0.1, preferably at least 0.3, higher or lower than n₁. The transparent material is a layer typically having an optical thickness corresponding to odd numbered multiples (that is, 1, 3, 5, 7 ...) of about one-quarter wavelength of light in the wavelength range of about 380 to about 1,000 nanometers. Thus, either n₂ >n₁ <n₃ or n₂ <n₁ >n₃, and the materials on either side of the transparent layer may be either both higher or both lower in refractive index than n₁. When n₁, is higher than both n₂ and n₃, n₁ is preferably in the 1.7 to 4.9 range, and n₂ and n₃ are preferably in the 1.2 to 1.7 range. Conversely, when n₁ is lower than both n₂ and n₃, n₁ is preferably in the 1.2 to 1.7 range, and n₂ and n₃ are preferably in the 1.7 to 4.9 range. The dielectric mirror preferably comprises a contiguous array of materials, at least one being in layer form, having an alternating sequence of refractive indices. In a preferred embodiment the contiguous array has from two to seven layers, preferably three to five layers. Desirably all are light transparent materials and are clear or essentially colorless to minimize light absorption and maximize light transmission of the retroreflective sheet.

Among the many compounds that may be used in providing transparent materials within the desired refractive index range are: high index materials such as CdS, CeO₂, Csl, GaAs, Ge, InAs, InP, InSb, ZrO₂, Bi₂ O₃, ZnSe, ZnS, WO₃, PbS, PbSe, PbTe, Rbl, Si, Ta₂O₅, Te, TiO₂ ; low index materials such as Al₂ O₃, AlF₃, CaF₂, CeF₃, LiF, MgF₂, NaCl, Na₃AlF₆, ThOF₂, elastomeric copolymers of perfluoropropylene and vinylidene fluoride et cetera. Other materials are reported in Thin Film Phenomena, K. L. Chopra, page 750, McGraw-Hill Book Company, New York, (1969). Preferred succeeding layers contain cryolite (Na₃ AlF₆) and zinc sulfide.
Dielectric mirrors or similar multi-layer reflective coatings can also be used in combination with cube corner sheeting as disclosed in e.g. JP 06-347622, US 6,172,810, US 6,224,219, US 6,243,201 and US 6,350,034.

Cube corner sheeting, sometimes referred to as prismatic, microprismatic, triple mirror or total internal reflection sheetings, typically include a multitude of cube corner elements to retroreflect incident light. Cube corner retroreflectors typically include a sheet having a generally planar front surface and an array of cube corner elements protruding from the back surface. Cube corner reflecting elements include generally trihedral structures that have three approximately mutually perpendicular lateral faces meeting in a single corner, i.e. a cube corner. In use, the retroreflector is typically arranged with the front surface disposed generally toward the anticipated location of intended observers and the light source. Light incident on the front surface enters the sheet and passes through the body of the sheet to be reflected by each of the three faces of the elements, so as to exit the front surface in a direction substantially toward the light source. In the case of total internal reflection, the air interface must remain free of dirt, water and adhesive and therefore is enclosed by a sealing film. Alternatively, reflective coatings may be applied on the lateral faces of the cube corners. Suitable reflective coatings that can be applied include transparent reflective metal layers or a dielectric mirror as described. When the cube corner elements are provided with a reflective coating they can also be used in a configuration where they are generally positioned to the anticipated location of an intended observer.

Polymers for cube corner sheeting include poly(carbonate), poly(methyl methacrylate), poly(ethylene terephthalate), aliphatic polyurethanes, as well as ethylene copolymers and ionomers thereof. Cube corner sheeting may be prepared by casting directly onto a film, such as described in U.S. Patent No. 5,691,846 (Benson, Jr.). Polymers for radiation-cured cube corners include cross-linked acrylates such as multifunctional acrylates or epoxies and acrylated urethanes blended with mono-and multifunctional monomers. Further, cube corners may be cast on to plasticized polyvinyl chloride film for more flexible cast cube corner sheeting. These polymers are often employed for one or more reasons including thermal stability, environmental stability, clarity, excellent release from the tooling or mold, and capability of receiving a reflective coating.

In an embodiment of this invention the cube corner sheeting may have a further polymeric layer bonded to the side of the cube corner sheeting that has the cube corner elements so as to form a plurality of closed cells in which an air interface is provided to the cube corner elements. Illustrative examples of cube corner-based retroreflective sheeting are disclosed in U.S. Pat. Nos. 4,588,258 (Hoopman); 4,775,219 (Appledorn et al.); 4,895,428 (Nelson); 5,138,488 (Szczech); 5,387,458 (Pavelka); 5,450,235 (Smith); 5,605,761 (Burns); 5,614,286 (Bacon Jr.) and 5,691,846 (Benson, Jr.).

The transparent polymeric support sheet and the retroreflective sheet are bonded together with one or more adhesive layers. The term 'bonded together' includes not only a configuration where the support sheet and retroreflective sheet are directly bonded to each other by the adhesive layer but also includes the option where one or more intermediate layers are present. For example, the retroreflective sheet and/or the polymeric support sheet may be coated with one or more primer layers to assure firm adhesion of the adhesive layer to these respective sheets. Still further, the sheets may be bonded to each other with two or more adhesive layers that are provided on opposite major sides of a transparent carrier layer.

The one or more adhesive layers suitable for bonding the support sheet and retroreflective sheet together should be transparent. Preferably the adhesive layer(s) will be at least 80%, preferably at least 90% transmissive for visible light. The adhesive layers preferably show good weatherability properties, have good thermal stability and are moisture resistant. The adhesive layer should furthermore create a high bond strength to each of the sheets such that the license plate cannot be delaminated. A sufficient bond strength typically means that the peel force necessary to delaminate the sheets from each other is at least 2 N/cm, preferably at least 4 N/cm. The adhesive layer may comprise a pressure sensitive adhesive, a heat-activatable adhesive, i.e. an adhesive that requires heat activation to develop a bond or a cross-linkable adhesive. Examples of adhesives include pressure sensitive adhesives (PSA) based on acrylic polymers, based on silicones or based on polyolefins as disclosed in Handbook of Pressure Sensitive Adhesive Technology (third edition) D.Satas, Ed. Satas and Associates, Warwick RI/USA, 1989 on pages 444-514, 550-556 and 423-442 respectively. Adhesives that may be used to bond to substrates having a low surface energy such as polyolefin or polycarbonate, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesives that can be used to create a strong bond in particular to a polycarbonate substrate include those disclosed in US 4,181,752, US 4,418,120 and WO 95/13331. These references teach PSA that are based on acrylic polymers that are cross-linked without however loosing their pressure sensitive adhesive properties. Further adhesive layer compositions that may be used include those that are based on a curable composition that upon curing creates a strong adhesive bond between the sheets. Suitable curable compositions that may be used include radiation curable epoxy compositions. Such compositions may be applied in their uncured (or partially cured) state between the sheets. Upon curing of the laminate through radiation, e.g. UV radiation or electron beam radiation, a firm and durable bond can be created. Examples of epoxy based curable compositions can be found in e.g. EP 1026218 and EP 620 259 disclosing a UV or electron beam curable epoxy composition comprising an epoxy resin, a polyester and optionally a photoinitiator. Still further epoxy-based adhesive compositions are disclosed in US 4,622,349, US 4,812,488, US 4,920,182, US 4,256,828 and EP 276716. Further, according to a particular embodiment of the invention, an epoxy based pressure sensitive thermosetting adhesive can be used as disclosed in US 5,086,088. This US patent discloses a pressure-sensitive thermosetting adhesive comprising from about 30% to about 80% by weight of a photopolymerizable prepolymeric or monomeric syrup containing an acrylic ester and a polar copolymerizable monomer, from about 20% to about 60% by weight of an epoxy resin or a mixture of epoxy resins containing no photopolymerizable groups, from about 0.5% to about 10% by weight of a heat-activatable hardener for the epoxy resin, from about 0.01 % to about 5% of a photoinitiator, and from 0% to about 5% of a photocrosslinking agent.

The license plate typically will have shape and dimensions conforming to relevant regulatory requirements. Also, the license plate will comprise indicia that represent the number of the license plate as may be issued by a relevant authority. In addition to indicia representing the number of the license plate, the license plate may comprise further indicia such as for example indicia showing the country letter or indicia giving indications of the manufacturer of the license plate and/or date of issuance of the license plate. Some of these latter indicia may be in machine readable form such as for example in the form of a bar code. The indicia of the license plate can be formed by any technique used in producing license plates. For example, the indicia, in particular those representing the number of the license plate, may be printed e.g. by thermal transfer printing or by ink jet printing or the indicia may be cut out of a colored adhesive film and glued on the plate. The indicia may be printed on or glued on the front face of the license plate or they can be buried in the license plate. In addition to printed indicia, the present invention also allows for the indicia to be raised. By raised indicia is meant that the indicia project from the front face of the license plate. Typically the indicia can be raised by 0.3 to 20 mm relative to the background of the license plate, preferably 0.5 to 15mm. Raised indicia may be obtained by deep drawing but are preferably made by embossing a laminate of the transparent polymeric support sheet and the retroreflective sheet. Preferably the raised surface of the indicia will be colored to render the indicia opaque or at least less transparent than the background of the license plate. Typically the raised surface may be colored by hot foil stamping or by roll coating with inks.

### Method of making the license plate

The license plate can be made by equipment and techniques that are typically used to produce conventional front lit license plates. Thus, according to one embodiment of the method, the license plate may be obtained by adhering the transparent polymeric support sheet and retroreflective sheet together followed by dimensioning and shaping the obtained laminated as desired. Alternatively however, the respective sheets forming the laminate may be dimensioned and shaped before being adhered together. Also, the license plate may be shaped and dimensioned so as to adapt it for being removably mounted to a light source. For example, a rim may be provided along one or more sides of the license plate. Such a rim may then be used to clamp the license plate against the light source. Alternative, such a rim may locate with one or more corresponding channels on the light source such the license plate may slide into these channels. Still further, portions of the license plate may be projecting beyond the required dimension of the license plate along one or more sides of the license plate and these may then be used to clamp the plate to the light source.

The laminate is then embossed to provide raised indicia. Such embossing is carried out at ambient temperature by pressing a metallic or thermoset polymeric template having a representation of the indicia on the license plate. Following this operation, the raised surfaces of the indicia may be colored by hot stamping a colored wax ribbon thereon. Accordingly, this method allows for making back-lit license plate using the equipment that is typically used to make embossed metallic license plates.

### License plate assembly

The license plate can be removably mounted to a variety of light sources that may be used to provide back lighting. By "removably mounted" is meant that the license plate can be mounted on the light source, removed therefrom and preferably mounted again to the light source. Generally, the mounting of the license plate to the light source is simple and easy and can be practiced by a user or owner of a car. For example, the license plate may be mounted to the light source using screws in much the same way as mounting of conventional license plates. Alternatively, the license plate may be clamped on the light source by means provided on the light source or the license plate may be mounted to the light source through the aid of a frame.

As mentioned above, the license plate can be used with a variety of light sources that have been used or disclosed for back lighting license plates. For example, the light source may comprise an electrically activatable layer or film that upon electrical activation emits light. Examples thereof include electroluminescent films such as for example those disclosed in WO 98/20375, which describes retroreflective signs such as billboards that are illuminated with an electroluminescent film. Generally, an electroluminescent layer or film will comprise a polymeric binder in which an electroluminescent material is dispersed. Such electroluminescent material may be selected according to a desired color to be emitted and a mixture of different electroluminescent material can be used. The electroluminescent material is typically an inorganic substance. However, organic electroluminescent materials are known as well and can be used also. Organic electroluminescent materials are known in the art as Organic Light Emitting Diodes (OLED). OLED's typically comprise on a substrate, one or more organic layers between two electrodes. The organic layers can be electrically activated with the electrodes as a result of which they start emitting light. The physical principle on which light is produced by the organic layers is known as "injection electroluminescence". Thus, an organic light emitting diode (OLED) typically comprises an organic light emitting layer disposed between two electrodes, whereby the organic light emitting layer luminesces when electricity flows between the electrodes. OLED are described in for example US 6,608,333 and US 6,501,218.

The light source for use in the license plate assembly may also comprise conventional Light Emitting Diodes (LED). Furthermore, according to a particular embodiment, the light source may comprise a light guide having a front face to which the license plate can be removably mounted, a back face opposite thereto and one or more side faces and (ii) a light source for illuminating the light guide arranged along at least portion of at least one of the side faces, the other side faces generally being closed so as to not to allow light to escape there through. The light source that is used in the edge lighting of the light guide is typically an elongate light source. An elongate light source emits light substantially along its longitudinal direction and comprises an elongated luminant, like a light tube, e.g. a fluorescent tube, or several individual luminants spaced from each other and arranged adjacent to each other along the longitudinal direction of the light source. Accordingly, an elongate light source can comprise a linear array of separate light emitting elements.

Within the light guide, light is transmitted by total internal reflection at the front and back and side faces until the light rays impinge onto the front face and onto the light-transmissive retro-reflective film at an angle at which the light is transmitted out of the front face of the light guide. The light guide may be a hollow or a solid light guide.

The amount of light extracted out of the front face of a light guide can be enhanced by light-scattering particles added to the transparent material of the light guide. Moreover, a back reflector can be arranged at the back face of the light guide. Reflectors can also be arranged at the side faces of the light guide. Both the back reflector and the side face reflectors preferably are diffuse reflective, specular reflective, or scattering reflective films with high reflection efficiency. Arranging reflectors and, in particular, highly diffuser or specular or scattering reflective films along the back and side faces of the light guide provides for a light guide in which light can escape exclusively through the front face so that most of the light of the light source can be used for illuminating the license plate. Accordingly, such a design is highly efficient with regard to the required brightness, even illumination, and power consumption.

Moreover, other light extraction mechanisms, films or paints (in addition to, or as an alternative to, the reflectors mentioned before) can be used with the light guide. Also light-extraction elements printed onto a surface of the light guide (e.g. dots of variable size, shape and density) can be employed. Such arrangements are described, for example, in US-A-5,736,686; 5,649,754; 5,600,462; 5,377,084; 5,363,294; 5,289,351; 5,262,928; 5,667,289; and 3,241,256. Other light extraction arrangements that can be practiced are described in US-A-5,618,096, WO-A-92/05535, and WO-A-01/71248.

The light source of the license plate may be provided as a device that can be removably mounted to the body of the motor vehicle or may be provided as an integral part of the motor vehicle body.

### Description of drawings

The invention is described in more detail below with reference to the following drawings illustrating particular embodiments of the invention without however intending to limit the invention thereto. Also the drawings are purely schematic drawings in which the various dimensions of the features shown may have been exaggerated and the relative proportion of the dimensions of the various features shown in the drawings will generally not correspond to their proportion in the actual embodiment illustrated by the schematic drawing.

Figure 1 represents a view at the front face of a license plate suitable for illumination from the back.
Figures 2 to 8 show a cross-section along line A in figure illustrating various embodiments of the license plate.
Figure 9 shows a license plate assembly of the license plate removably mounted before a light source.

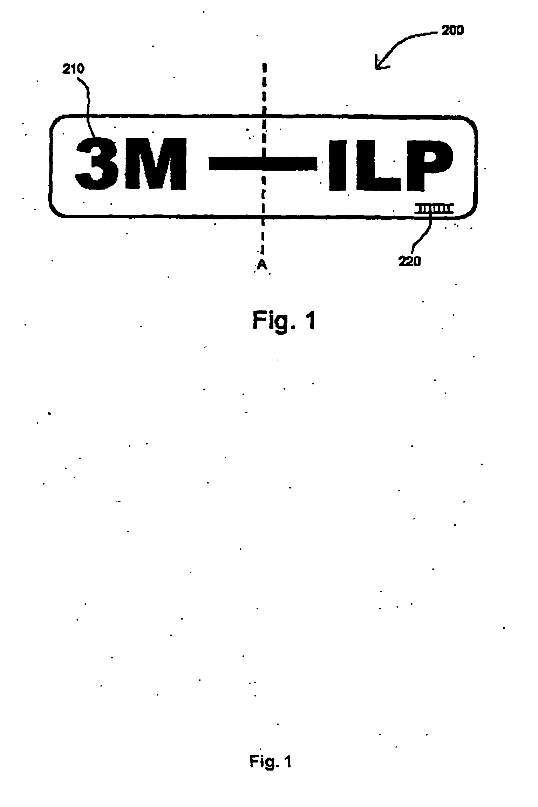

Figure 1 shows a license plate 200 comprising indicia 210 that define the number of the license plate as issued by an authority. License plate 200 further shows barcode 220 which may present additional information regarding the license plate such as source of its manufacturing.

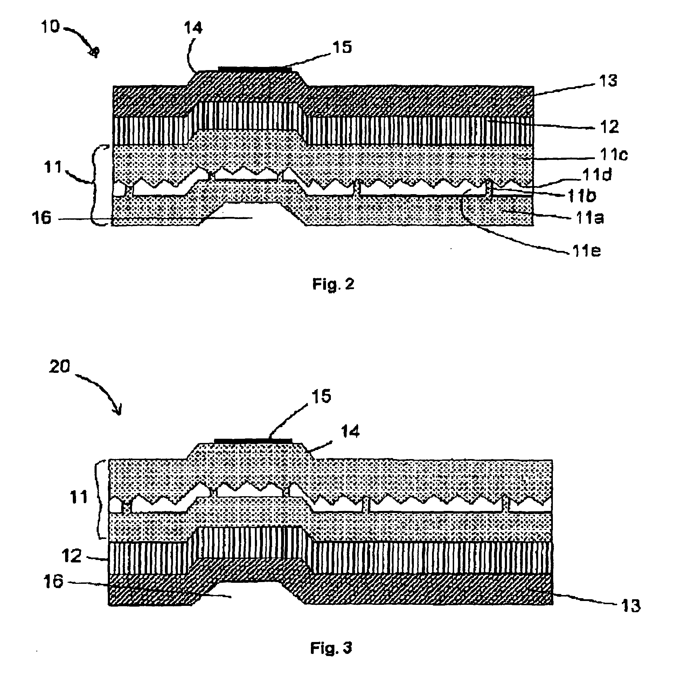

Figure 2 illustrates a first embodiment of the license plate. This embodiment as well as any of the following embodiments illustrated by figures 3 to 8 are illustrated by showing a cross-section of the license plate along line A in figure 1. Same features of the license plates shown in figures 2 to 8 will be represented by the same numerals. As shown in figure 2, license plate 10 comprises a transparent retroreflective sheet 11 adhered by means of transparent adhesive layer 12 to transparent polymeric support sheet 13. In use, the retroreflective sheet 11 will be arranged to face the light source and transparent polymeric support sheet 13 will face an observer. License plate 10 contains raised indicia 14 that on their raised surface have been colored, e.g. a black color to render them opaque or less transparent relative to the background of the license plate. Raised indicia 14 have been formed by embossing a laminate of the transparent polymeric support sheet 13 and retroreflective sheet 11. As a result thereof, the back side of license plate 10 contains a recess 16 corresponding to the shape of indicia 14 located opposite thereto at the front face of license plate 10. In the embodiment shown in figure 2, retroreflective sheet 11 comprises a cube corner based sheeting having a polymeric layer 11c having on one major side cube corner elements 11d. Cube corner elements 11d are protected by a seal film 11a that is sealed to the polymeric layer 11c by seals 11b, e.g. created by thermosealing, thus creating closed cells 11e that provide an air interface to the cube corner elements 11d. When license plate 10 is arranged on a light source with retroreflective sheet 11 facing the light source, light will penetrate through retroreflective sheet 11, adhesive layer 12 and transparent polymeric support sheet 13 such that the light of the light source will be seen by an observer at background areas of the license plate. In the areas where indicia 14 are provided, the light of the light source will be blocked at least partially by printing 15 and thus no or less light will be seen by the observer at these places. Thus, license plate 10 will show dark indicia on a illuminated background.

License plate 20 illustrated in figure 3 uses the same retroreflective sheet 11 as used in license plate 10 illustrated in figure 2. However, the layer arrangement in license plate 20 is reversed such that transparent polymeric support sheet 13 now defines the back side of the license plate, i.e. the side that in use will face the light source, and retroreflective sheet 11 now defines the front face of the license plate.

The high transparency of the retroreflective sheets used in the embodiments shown in figure 2 and 3 offers the advantage that the required levels of illumination can be readily adjusted through the transparency of the other layers. Furthermore levels of retroreflection as may be required by regulations can be easily achieved by adjusting the transparency of the adhesive layer or transparent polymeric support sheet or optional further layers in the embodiment illustrated in figure 2.

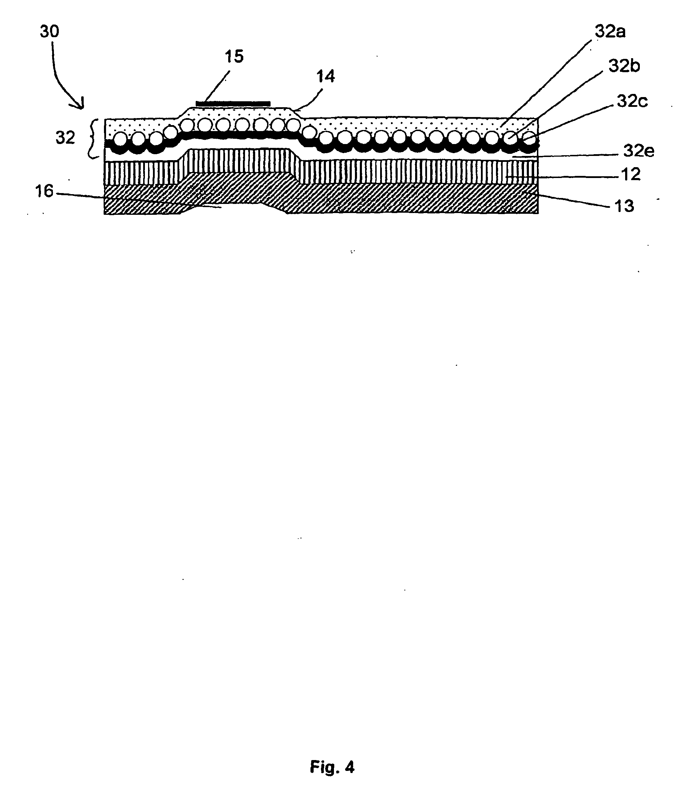

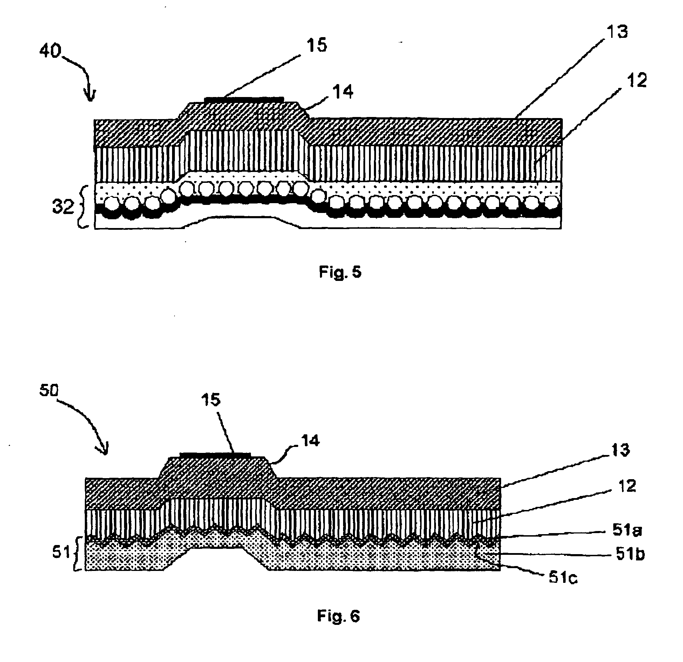

License plate 30 illustrated in figure 4 uses a beaded retroreflective sheeting 32. beaded retroreflective sheeting 32 comprises glass or ceramic microspheres 32b that are partially embedded in a binder layer 32e and that are protected by topcoat 32a. Functionally behind the microspheres 32b is a reflective layer 32c. Reflective layer 32c may be a translucent reflective metal layer but is preferably a dielectric mirror as described above. Between the microspheres and the reflective layer 32c there may be provided a space coat as described above. Also, depending on the nature and composition of the adhesive layer, the binder layer 32e may not be required and the microspheres may then be embedded in adhesive layer 12. Retroreflective sheet 32 is arranged such that the microspheres will be facing towards an observer and the reflective layer is behind the microspheres from the viewpoint of the observer. While license plate 30 has the retroreflective sheet 32 at its front face, license plate 40 (figure 5) shows the opposite arrangement where the retroreflective sheet 32 is at the back side of the license plate.

Figure 6 illustrates license plate 50 that uses retroreflective sheet 51. Retroreflective sheet 51 is a cube corner based sheeting having a polymeric layer having cube corner elements 51c on one major side. These cube corner elements are provided with a transparent or translucent reflective layer 51a and the cube corner elements are in-between filled with transparent adhesive layer 12. Reflective layer 51a may be a translucent metal layer but is preferably a dielectric mirror. In the embodiment shown in figure 6, the cube corners are facing towards an observer viewing license plate 50 from the front. Such an arrangement is known as a reverse-cube arrangement.

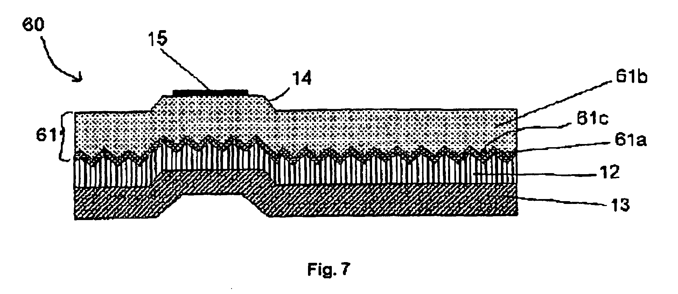

In figure 7, license plate 60 uses retroreflective sheet 61. Retroreflective sheet 61 is a cube corner based sheeting having polymeric layer having cube corner elements 61c on one major side. These cube corner elements are provided with a transparent or translucent reflective layer 61a and the cube corner elements are in-between filled with transparent adhesive layer 12. Reflective layer 61a may be a translucent metal layer but is preferably a dielectric mirror. In the embodiment shown in figure 7, the cube corners are facing away from an observer viewing license plate 50 from the front as is typically the case when using cube corner retroreflective sheeting.

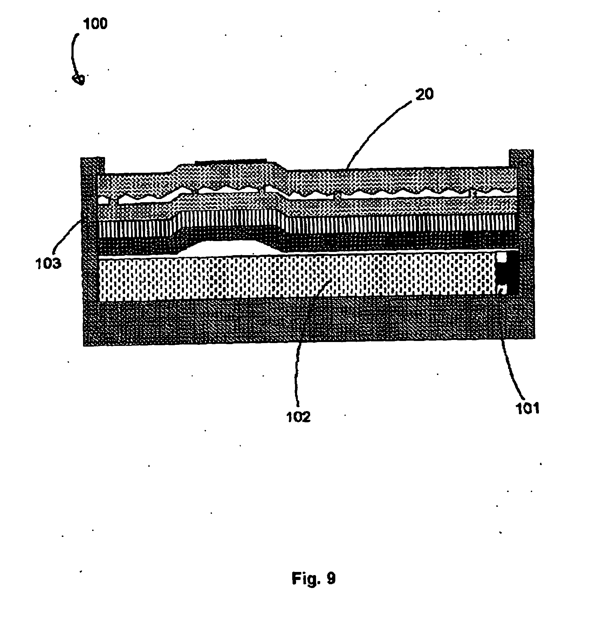

Figure 9 illustrates a license plate assembly according to the invention. License plate assembly 100 comprises a light source that consists of a light guide 102 and an elongated light source 101 lighting the light guide from one of its side faces. On the front face of the light guide is arranged license plate 20. License plate 20 is removably mounted to the light source by clamping it in frame 103 of the license plate assembly 100.

## Claims

1. License plate (200) suitable for back illumination, said license plate (200) comprising a laminate comprising:
(i) a transparent support sheet (13);
(ii) a transparent retroreflective sheet (11);
(iii) one or more transparent adhesive layers (12) adhering said transparent polymeric support sheet (13) and said transparent retroreflective sheet (11) together; and
(iv) raised indicia (14) and
wherein said license plate (200) can be removably mounted to a light source for back lighting the license plate (200), and wherein said indicia (14) are opaque or have a reduced transparency relative to background areas of the license plate, **characterized in that** said support sheet (13) is a transparent polymeric support sheet adapted such that said raised indicia are formed in the transparent polymeric support sheet at ambient temperature of 20 to 35°C through embossing or deep drawing and that such said raised indicia are maintained at elevated temperatures to which the license plate may be exposed, and therefore the polymeric support is adapted to provide a heat stability of 60°C to 85°C.

2. License plate (200) according to claim 1 wherein said indicia (14) comprise raised structures,

3. License plate (200) according to claim 1 wherein said indicia (14) comprise raised structures having a thickness of 0.3 mm to 20 mm.

4. License plate (200) according to any of the previous claims comprising indicia (14) obtainable by embossing said laminate.

5. License plate (200) according to any of the previous claims wherein said polymeric support sheet (13) is selected from the group consisting of polycarbonate and a multi-layer laminate comprising two or more transparent thermoplastic polymeric layers bonded together by one or more layers of a transparent cross-linked material.

6. License plate (200) according to any of the previous claims wherein said transparent retroreflective sheet (11) comprises a retroreflective sheet comprising a layer of glass and/or ceramic microspheres (32b) and a reflective layer, said reflective layer being provided on said layer of glass and/or ceramic microspheres (32b).

7. License plate (200) according to claim 6 wherein said reflective layer comprises one or more translucent reflective metal layers and/or one or more dielectric mirror layers.

8. License plate (200) according to any of claims 1 to 5 wherein said transparent retroreflective sheet (11) comprises a cube corner layer (11c) having opposite first and second surfaces, said first surface being generally planar and said second surface having a plurality of cube corner elements (11d) protruding therefrom

9. License plate (200) according to claim 8 wherein said cube corner elements (11d) are provided with a reflective layer.

10. License plate (200) according to claim 8 wherein a further polymeric layer is bonded to said second surface of said cube corner layer (11d) so as to form a plurality of closed cells (11c) in which an air interface is provided to said cube corner element (11d).

11. License plate (200) assembly comprising a light source and a license plate as defined in any of claims 1 to 10 removably mounted in front of said light source.

12. License plate (200) assembly according to claim 11 wherein said light source comprises an electroluminescent device or a lighting device comprising (i) a light guide having a front face to which said license plate can be removably mounted, a back face opposite thereto and one or more side faces and (ii) a light source for illuminating said light guide arranged along at least portion of at least one of said side faces.

13. License plate (200) assembly according to claim 11 wherein said light source is an integral part of a motor vehicle body.

## Patentansprüche

1. Für die Hinterbeleuchtung geeignetes Kennzeichenschild (200), wobei das Kennzeichenschild (200) ein Laminat aufweist, das Folgendes aufweist:
(i) eine transparente Trägerfolie (13);
(ii) eine transparente retroreflektierende Folie (11);
(iii) eine oder mehrere transparente Klebstoffschichten (12), welche die transparente polymere Trägerfolie (13) und die transparente retroreflektierende Folie (11) zusammenkleben; und
(iv) eine erhabene Beschriftung (14) und
wobei das Kennzeichenschild (200) zwecks seiner Hinterbeleuchtung entfernbar auf einer Lichtquelle montiert werden kann und wobei die Beschriftung (14) undurchsichtig ist oder eine gegenüber Hintergrundbereichen des Kennzeichenschilds reduzierte Transparenz aufweist, **dadurch gekennzeichnet, dass** die Trägerfolie (13) eine transparente polymere Trägerfolie ist, die so angepasst ist, dass die erhabene Beschriftung bei Umgebungstemperatur von 20 bis 35°C in der transparenten polymeren Trägerfolie durch Prägen oder Tiefziehen geformt wird und so, dass die erhabene Beschriftung bei erhöhten Temperaturen, denen das Nummernschild ausgesetzt sein kann, erhalten bleibt, und daher ist der polymere Träger angepasst, eine Hitzebeständigkeit von 60°C bis 85°C bereitzustellen.

2. Kennzeichenschild (200) nach Anspruch 1, wobei die Beschriftung (14) erhabene Strukturen aufweist.

3. Kennzeichenschild (200) nach Anspruch 1, wobei die Beschriftung (14) erhabene Strukturen mit einer Dicke von 0,3 mm bis 20 mm aufweist.

4. Kennzeichenschild (200) nach einem der vorhergehenden Ansprüche, das eine Beschriftung (14) aufweist, die durch Prägen des Laminats erzielt werden kann.

5. Kennzeichenschild (200) nach einem der vorhergehenden Ansprüche, wobei die polymere Trägerfolie (13) gewählt ist aus der Gruppe, die aus Polycarbonat und einem Mehrschicht-Laminat besteht, das zwei oder mehr transparente thermoplastische polymere Schichten aufweist, die mit einer oder mehreren Schichten eines transparenten vernetzten Materials verklebt sind.

6. Kennzeichenschild (200) nach einem der vorhergehenden Ansprüche, wobei die transparente retroreflektierende Folie (11) eine retroreflektierende Folie aufweist, die eine Schicht von Mikrokugeln aus Glas und/oder Keramik (326) und eine reflektierende Schicht aufweist, wobei die reflektierende Schicht auf der Schicht von Mikrokugeln aus Glas und/oder Keramik (326) bereitgestellt wird.

7. Kennzeichenschild (200) nach Anspruch 6, wobei die reflektierende Schicht eine oder mehrere durchsichtige reflektierende Metallschichten und/oder eine oder mehrere dielektrische Spiegelschichten aufweist.

8. Kennzeichenschild (200) nach einem der Ansprüche 1 bis 5, wobei die transparente retroreflektierende Folie (11) eine Würfeleckenschicht (11c) aufweist, die gegenüberliegende erste und zweite Oberflächen aufweist, wobei die erste Oberfläche im Allgemeinen eben ist und die zweite Oberfläche mehrere Würfeleckenelemente (11d) aufweist, die daraus hervorstehen.

9. Kennzeichenschild (200) nach Anspruch 8, wobei die Würfeleckenelemente (11d) mit einer reflektierenden Schicht versehen sind.

10. Kennzeichenschild (200) nach Anspruch 8, wobei eine weitere polymere Schicht an die zweite Oberfläche der Würfeleckenschicht (11d) geklebt ist, so dass mehrere geschlossene Zellen (11e) gebildet werden, in denen dem Würfeleckenelement (11d) eine Luftgrenzfläche bereitgestellt wird.

11. Kennzeichenschild-(200)-Baugruppe, die eine Lichtquelle und ein Kennzeichenschild nach einem der Ansprüche 1 bis 10 aufweist, das entfernbar vor der Lichtquelle montiert ist.

12. Kennzeichenschild-(200)-Baugruppe nach Anspruch 11, wobei die Lichtquelle eine elektrolumineszierende Vorrichtung oder eine Beleuchtungsvorrichtung aufweist, die Folgendes aufweist: (i) einen Lichtleiter, der eine Frontfläche aufweist, auf welche das Kennzeichenschild entfernbar montiert werden kann, eine dieser gegenüberliegende Rückfläche und eine oder mehrere Seitenflächen und (ii) eine Lichtquelle zur Beleuchtung des Lichtleiters, die entlang mindestens einem Teil von mindestens einer der Seitenflächen angeordnet ist.

13. Kennzeichenschild-(200)-Baugruppe nach Anspruch 11, wobei die Lichtquelle ein integraler Teil einer Kraftfahrzeugkarosserie ist.

## Revendications

1. Plaque d'immatriculation (200) pouvant être illuminée par derrière, ladite plaque d'immatriculation (200) comprenant un élément stratifié, comprenant:
(i) une feuille de support transparente (13);
(ii) une feuille rétro-réfléchissante transparente (11);
(iii) une ou plusieurs couches adhésives transparentes (12) collant ladite feuille de support polymère transparente (13) et ladite feuille rétro-réfléchissante transparente (11) l'une à l'autre; et
(iv) des empreintes en relief (14), et
dans laquelle ladite plaque d'immatriculation (200) peut être montée de façon amovible sur une source de lumière pour un éclairage par derrière de la plaque d'immatriculation (200); et dans laquelle lesdites empreintes (14) sont opaques ou présentent une transparence réduite par rapport aux régions d'arrière-plan de la plaque d'immatriculation, **caractérisée en ce que** ladite feuille de support (13) est une feuille de support polymère transparente adaptée de sorte que lesdites empreintes en relief soient formées dans la feuille de support polymère transparente à la température ambiante de 20 à 35°C par estampage ou emboutissage et que cesdites empreintes en relief soient conservées à des températures élevées auxquelles la plaque d'immatriculation peut être exposée, et donc le support polymère est adapté pour fournir une stabilité à la chaleur de 60°C à 85°C.

2. Plaque d'immatriculation (200) selon la revendication 1, dans laquelle lesdites empreintes (14) comprennent des structures saillantes.

3. Plaque d'immatriculation (200) selon la revendication 1, dans laquelle lesdites empreintes (14) comprennent des structures saillantes dont l'épaisseur est comprise entre 0,3 mm et 20 mm.

4. Plaque d'immatriculation (200) selon l'une quelconque des revendications précédentes, comprenant des empreintes (14) pouvant être formées par un gaufrage dudit élément stratifié.

5. Plaque d'immatriculation (200) selon l'une quelconque des revendications précédentes, dans laquelle ladite feuille de support polymère (13) est sélectionnée dans le groupe comprenant le polycarbonate et un élément stratifié multicouche comprenant deux ou plus de deux couches polymères thermoplastiques transparentes liées les unes aux autres par une ou plusieurs couches de matière réticulée transparente.

6. Plaque d'immatriculation (200) selon l'une quelconque des revendications précédentes, dans laquelle ladite feuille rétro-réfléchissante transparente (11) comprend une couche rétro-réfléchissante comprenant une couche de microsphères de verre et/ou de céramique (32b) et une couche réfléchissante, ladite couche réfléchissante étant déposée sur ladite couche de microsphères de verre et/ou de céramique (32b).

7. Plaque d'immatriculation (200) selon la revendication 6, dans laquelle ladite couche réfléchissante comprend une ou plusieurs couches métalliques réfléchissantes translucides et/ou une ou plusieurs couches de miroir diélectriques.

8. Plaque d'immatriculation (200) selon l'une quelconque des revendications 1 à 5, dans laquelle ladite feuille rétro-réfléchissante transparente (11) comprend une couche cunéiforme (11c) présentant des première et deuxième surfaces opposées, ladite première surface étant essentiellement plane et ladite deuxième surface comprenant une pluralité d'éléments cunéiformes (11d) saillant à partir de celle-ci.

9. Plaque d'immatriculation (200) selon la revendication 8, dans laquelle lesdits éléments cunéiformes (11d) comportent une couche réfléchissante.

10. Plaque d'immatriculation (200) selon la revendication 8, dans laquelle une couche polymère supplémentaire est collée sur ladite deuxième surface de ladite couche cunéiforme (11d) de manière à former une pluralité de cellules fermées (11e) dans laquelle une interface d'air est formée avec ledit élément cunéiforme (11d).

11. Ensemble de plaque d'immatriculation (200) comprenant une source de lumière et une plaque d'immatriculation selon l'une quelconque des revendications 1 à 10 montée de façon amovible devant ladite source de lumière.

12. Ensemble de plaque d'immatriculation (200) selon la revendication 11, dans lequel ladite source de lumière comprend un dispositif électroluminescent ou un dispositif d'éclairage comprenant (i) un guide de lumière présentant une face avant sur laquelle ladite plaque d'immatriculation peut être montée de façon amovible, une face arrière opposée à celle-ci et une ou plusieurs faces latérales, et (ii) une source de lumière pour éclairer ledit guide de lumière arrangée le long d'au moins une partie d'au moins une desdites faces latérales.

13. Ensemble de plaque d'immatriculation (200) selon la revendication 11, dans lequel ladite source de lumière fait intégralement partie d'une carrosserie de véhicule à moteur.
